# FASCICULE DE BREVET EUROPEEN

(11) **EP 1 122 400 B1**
(45) Date de publication et mention de la délivrance du brevet: **25.08.2004**
(21) Numéro de dépôt: 01460008.4
(22) Date de dépôt: 01.02.2001
(51) Int. Cl.: E06B 9/44, E06B 9/50, E06B 9/60, B60J 1/20

(54) **Store à enrouleur à fixation améliorée du ressort de store, ressort et procédé de fabrication correspondants.**
Rollo mit verbesserter Federbefestigung, Feder und entsprechendes Herstellungsverfahren
Roller blind with improved mounting of blind spring, spring and corresponding manufacturing process

(30) Priorité: 02.02.2000 FR 0001329
(43) Date de publication de la demande: 08.08.2001
(73) Titulaire: WAGON SAS, 79300 Bressuire (FR)
(72) Inventeur: Jincheleau, M. Michel, 79320 Moncoutant (FR)
(74) Mandataire: Vidon, Patrice

(56) Documents cités:
- FR-A- 2 010 004
- FR-A- 2 542 364
- FR-A- 2 790 031

## Description

Le domaine de l'invention est celui des stores à enrouleur, notamment pour les véhicules automobiles. Plus précisément, l'invention concerne la fixation et le maintien des moyens de rappel permettant l'enroulement automatique du rideau d'un tel store.

Classiquement, les stores à enrouleur présentent un tube d'enroulement de la toile du store, qui est sollicité par un couple de rappel qui tend à enrouler la toile autour du tube, jusqu'à faire porter l'extrémité libre de cette toile équipée d'une barre de tirage contre les bords d'une fente au travers de laquelle la toile peut être déployée. Cette fente est par exemple ménagée dans un boîtier dans lequel le tube d'enroulement est monté tournant, ou directement dans la garniture d'une portière, lorsque le store est monté à l'intérieur de celle-ci. Dans une version simplifiée, le store est réalisé sans boîtier.

Classiquement, le couple d'enroulement est engendré par un ressort spiral, ou à boudin, ou par un ressort à spires hélicoïdales. Ce ressort s'étend à l'intérieur du tube, et est attelé par une de ses extrémités au tube, et par son autre extrémité à un élément de structure fixe (solidaire du boîtier).

Dans la plupart des stores connus, chacune des extrémités du ressort est solidaire d'un embout, ou bouchon. Dans tous les cas, les bouchons sont introduits à force, en général avec un mouvement de vissage, de façon que plusieurs spires d'extrémité soient solidarisées au bouchon.

La fiabilité de la fixation du ressort sur les bouchons est relativement efficace, en particulier avec la technique présentée dans le document de brevet FR-A-279 0031 au nom du déposant de la présente demande. Toutefois, cette fiabilité est obtenue au prix de difficultés de montage. En effet, l'opération de montage consistant à introduire à force les bouchons dans les ressorts est réalisée manuellement et s'avère assez fastidieuse dans la pratique.

L'invention a notamment pour objectif de pallier cet inconvénient de l'état de la technique.

Plus précisément, un objectif de l'invention est de fournir un store à enrouleur qui soit plus simple à monter que les stores connus, tout en assurant le même niveau de fiabilité.

L'invention a également pour objectif de fournir un tel store, qui soit peu coûteux à fabriquer et à mettre en oeuvre, et qui réduise le nombre de pièces à monter et/ou simplifie ces pièces.

Ces objectifs, ainsi que d'autres qui apparaîtront par la suite, sont atteints à l'aide d'un store à enrouleur, notamment pour véhicule automobile, du type présentant un ressort spiral destiné à imprimer une force de rappel sur un rouleau d'enroulement d'un rideau de store. Selon l'invention, au moins une des extrémités dudit ressort présente au moins une spire ayant un profil non circulaire prévu pour qu'elle puisse prendre place dans un logement complémentaire ménagé dans un élément auquel ledit ressort doit être solidarisé, de façon que ladite spire ayant un profil non circulaire reste en permanence immobile en rotation par rapport audit élément.

Ainsi, il n'est plus nécessaire de prévoir un bouchon de solidarisation du ressort, qui devait selon l'art antérieur être introduit à force dans l'extrémité du ressort (avec des risques de désolidarisation). Les opérations de montage sont donc plus simples, plus fiables et moins coûteuses (nombre de pièces réduit, simplicité et efficacité de la solidarisation, ...).

Il suffit en effet, de déformer une ou plusieurs spires d'extrémités, pour les rendre solidarisables du logement correspondant. Notamment, selon un mode de réalisation avantageux, ledit profil non circulaire peut présenter au moins un méplat.

Ledit profil non circulaire appartient préférentiellement au groupe comprenant :
- les profils plans, formant un unique méplat ;
- les profils carrés ou rectangulaires ;
- les profils présentant deux méplats sensiblement parallèles ;
- les profils hexagonaux ;
- les profils ovoïdes ou oblongs ;
- les profils présentant au moins un bossage et/ou au moins un renfoncement.

Bien sûr, d'autres profils sont envisageables sans sortir du cadre de l'invention.

De façon avantageuse, ledit logement complémentaire présente des moyens de maintien empêchant la ou lesdites spires non circulaires de sortir dudit logement.

L'invention concerne également les ressorts tels que décrits ci-dessus, en tant que tels.

De même, l'invention concerne encore le procédé de fabrication et de montage d'un store à enrouleur présentant un tel ressort. Ce procédé comprend préférentiellement les étapes de :
- façonnage d'au moins une spire d'au moins une des extrémités dudit ressort spiral, de façon qu'elle présente un profil non circulaire ;
- réalisation, dans le ou les éléments devant être solidarisés audit ressort spiral, d'un logement prévu à cet effet ;
- insertion de la ou desdites spires au profil non circulaire dans le ou lesdits logements.

D'autres caractéristiques et avantages de l'invention telle que décrite dans les revendications apparaîtront plus clairement à la lecture de la description suivante de quatre modes de réalisation préférentiels de l'invention, donnés à titre d'exemples illustratifs et non limitatifs, et des dessins annexés parmi lesquels :
- la figure 1 est une vue en coupe d'un store à enrouleur de l'état de l'art antérieur ;
- les figures 2A et 2B illustrent un premier mode de réalisation selon l'invention, dans lequel les spires terminales du ressort présentent un profil circulaire tronqué par deux méplats parallèles ;
- les figures 3A et 3B illustrent un deuxième mode de réalisation dans lequel les spires terminales du ressort présentent un profil carré ;
- les figures 4A et 4B illustrent un troisième mode de réalisation dans lequel les spires terminales du ressort présentent un profil hexagonal ;
- les figures 5A et 5B illustrent un quatrième mode de réalisation dans lequel les spires terminales du ressort présentent un profil circulaire doté d'un renfoncement.

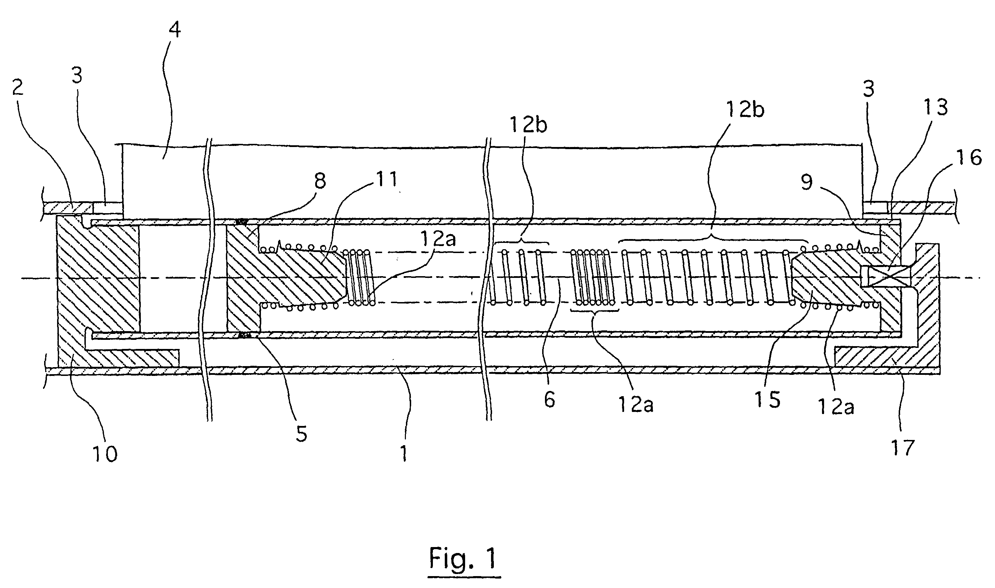

Avant de décrire en détail le ressort selon l'invention, et son montage, on décrit rapidement un store de type connu. La figure 1 présente, en coupe, un store monté dans un boîtier 2, présentant un socle de fixation 1, ledit boîtier présentant une fente 3, au travers de laquelle la toile 4 peut être déployée. Le boîtier 2 renferme un mécanisme d'enroulement comprenant un tube 5 sur lequel une extrémité de la toile est fixée. Ce tube 5 est monté tournant autour de son axe longitudinal 6 à l'intérieur du boîtier 2.

Le ressort 12 est solidaire d'une part d'un bouchon 8 monté fixe à rotation et en translation à l'intérieur du tube 5, d'un bouchon 9, d'autre part, constituant un palier autour duquel le tube 5 peut tourner.

Les bouchons 8 et 9 sont, selon l'art antérieur, introduits à force avec un mouvement de vissage dans le ressort avant le montage de l'ensemble dans le boîtier 2.

L'invention propose une nouvelle approche de la solidarisation du ressort 12 aux bouchons, ou le cas échéant directement au palier ou au boîtier. Pour cela, on modifie le profil, ou la section, d'au moins une spire, que l'on monte dans l'élément auquel elle doit être solidarisée, de façon qu'elle ne soit pas libre en rotation selon l'axe 6, par rapport à cet élément (bouchon, palier ou boîtier).

L'invention propose donc qu'une, ou préférentiellement plusieurs, spires terminales soient non circulaires. Un logement complémentaire (c'est-à-dire de forme adaptée à recevoir et immobiliser les spires non circulaires) est prévu dans l'élément de fixation.

Il est clair que le profil non circulaire peut être quelconque. Il peut s'agir d'un profil plat (obtenu par exemple par écrasement). A titre d'exemples non limitatifs, on décrit ci-après trois variantes possibles.

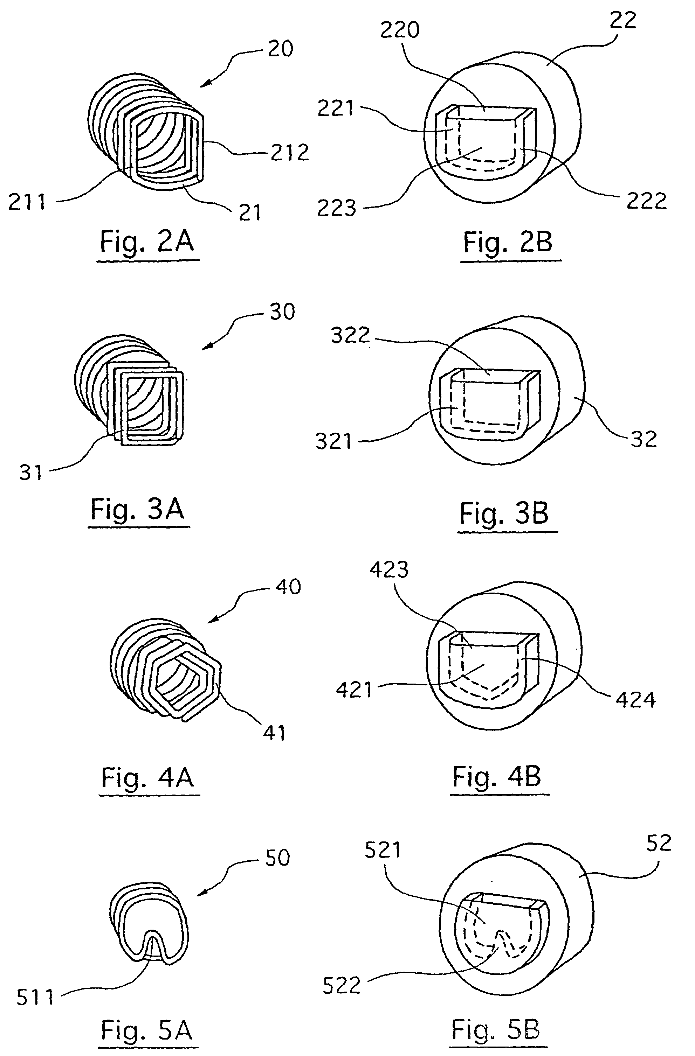

Selon un premier mode de réalisation illustré par les figures 2A et 2B, le ressort 20 présente en chacune de ses extrémités des spires terminales 21 non circulaires, par exemple en nombre de trois à cinq. Le profil des spires terminales 21 se compose de deux portions de cercle espacées par deux méplats 211, 212 sensiblement parallèles (obtenus par exemple par pressage).

Les bouchons 8 et 9 de la figure 1 peuvent donc être remplacés par deux bouchons identiques 22 tels que représentés sur la figure 2B. Ces bouchons comportent une portion cylindrique destinée à s'ajuster à l'intérieur du tube d'enroulement 5. Cette portion cylindrique est prolongée pour former un logement 220 destiné à recevoir trois à cinq spires terminales du ressort 20. Le logement est délimité par deux parois droites 221, 222 bordant un fond incurvé.

On comprend aisément que les spires terminales 21 du ressort 20 s'insèrent parfaitement dans le logement 220 du bouchon 22, les méplats 211 et 212 de la spire terminale coopérant avec les parois droites 221 et 222 pour interdire la rotation du ressort par rapport au bouchon.

La paroi 223 empêche le retrait axial du ressort 20 du logement 220. Le ressort est mis en place à chevauchement sur la paroi 223.

Le ressort peut être à spires jointives ou non, ou encore présenter une alternance de spires jointives et non jointives. Préférentiellement, les spires d'extrémité seront jointives, de façon à chevaucher la paroi en la pinçant, améliorant ainsi le blocage du ressort en translation.

Le montage des ressorts dans les bouchons est ainsi grandement facilité. Il suffit de mettre en place les spires terminales du ressort dans le logement des bouchons, le blocage en rotation du ressort par rapport au bouchon étant directement obtenu contrairement à l'état de l'art qui nécessitait un montage en force fastidieux.

Les figures 3A et 3B illustrent un deuxième mode de réalisation dans lequel les spires terminales 31 du ressort 30 présentent un profil carré. Les bouchons 32 comportent un logement 321 délimité par trois parois sensiblement à angle droit.

Les figures 4A et 4B illustrent un troisième mode de réalisation dans lequel les spires terminales 41 du ressort 40 présentent un profil hexagonal. Les bouchons 42 comportent un logement 421 délimité par quatre parois coïncidant avec le profil des spires terminales 41.

Une fente 424 dimensionnée pour permettre le passage du fil du ressort peut être ménagée sur le côté de la paroi 423 pour faciliter la mise en place du ressort dans le logement 421.

Les figures 5A et 5B illustrent un quatrième mode de réalisation dans lequel les spires terminales 51 du ressort 50 présentent un profil circulaire déformé par un renfoncement 511. Les bouchons 52 comportent un logement 521 en U au fond et sur la longueur duquel est présente une excroissance 522.

Il est clair que de nombreux autres modes de réalisation de l'invention peuvent être envisagés, notamment en appliquant un des modes de réalisation précités à une extrémité et un autre mode à l'autre extrémité.

La tension du ressort empêche les spires d'extrémités de ressortir du logement, en fonctionnement normal. Par sécurité, on peut cependant prévoir, dans et/ou sur le logement, des moyens d'accrochage, tels qu'une légère protubérance dans laquelle une spire pourra se clipser, au fond du logement. De telles protubérances peuvent également être prévues au niveau de l'ouverture du logement (322, figure 3).

Selon une autre approche, on peut prévoir que les parois 221 et 222 ne sont pas tout à fait parallèles, mais se rapproche l'une de l'autre au niveau de l'ouverture. Dans le mode de réalisation des figures 5A et 5B, ce résultat peut encore être obtenu en réalisant l'excroissance sur une des parois latérales.

## Revendications

1. Store à enrouleur, notamment pour véhicule automobile, du type présentant un ressort spiral (20 ; 30 ; 40 ; 50 ; 60 ; 70) destiné à imprimer une force de rappel sur un rouleau d'enroulement (5) d'un rideau (4) de store,
**caractérisé en ce qu'**au moins une des extrémités dudit ressort présente au moins une spire (21 ; 31 ; 41) ayant un profil non circulaire prévu pour qu'elle puisse prendre place dans un logement complémentaire (221 ; 321 ; 421 ; 521) ménagé dans un élément auquel ledit ressort doit être solidarisé, de façon que ladite spire ayant un profil non circulaire reste en permanence immobile en rotation par rapport audit élément.

2. Store à enrouleur selon la revendication 1, **caractérisé en ce que** ledit profil non circulaire présente au moins un méplat (211, 212).

3. Store à enrouleur selon l'une quelconque des revendications 1 et 2, **caractérisé en ce que** ledit profil non circulaire appartient au groupe comprenant :
- les profils plans, formant un unique méplat ;
- les profils carrés ou rectangulaires ;
- les profils présentant deux méplats sensiblement parallèles ;
- les profils hexagonaux ;
- les profils ovoïdes ou oblongs ;
- les profils présentant au moins un bossage et/ou au moins un renfoncement.

4. Store à enrouleur selon l'une quelconque des revendications 1 à 3, **caractérisé en ce que** ledit logement complémentaire (221 ; 321 ; 421 ; 521) présente des moyens de maintien empêchant la ou lesdites spires non circulaires de sortir dudit logement.

5. Ressort spiral destiné à imprimer une force de rappel sur un rouleau d'enroulement d'un rideau de store, notamment pour véhicule automobile,
**caractérisé en ce qu'**au moins une des extrémités dudit ressort présente au moins une spire (21 ; 31 ; 41) ayant un profil non circulaire prévu pour qu'elle puisse prendre place dans un logement complémentaire (221 ; 321 ; 421 ; 521) ménagé dans un élément auquel ledit ressort doit être solidarisé, de façon que ladite spire ayant un profil non circulaire reste en permanence immobile en rotation par rapport audit élément.

6. Procédé de fabrication et de montage d'un store à enrouleur, notamment pour véhicule automobile, du type présentant un ressort spiral destiné à imprimer une force de rappel sur un rouleau d'enroulement d'un rideau de store,
**caractérisé en ce qu'**il comprend les étapes de :
- façonnage d'au moins une spire (21 ; 31 ; 41 ; 62 ; 71) d'au moins une des extrémités dudit ressort spiral, de façon qu'elle présente un profil non circulaire ;
- réalisation, dans le ou les éléments (22 ; 32 ; 42 ; 52) devant être solidarisés audit ressort spiral, d'un logement (221, 321, 421, 521) prévu à cet effet ;
- insertion de la ou desdites spires au profil non circulaire dans le ou lesdits logements.

## Patentansprüche

1. Aufrollbarer Vorhang des Typs Rollo, insbesondere für Kraftfahrzeuge, mit einer Spiralfeder (20; 30; 40; 50; 60; 70), die auf die Aufrollwalze (5) der aufrollbaren Stoffbahn (4) eine Rückholkraft ausüben soll,
**dadurch gekennzeichnet, dass** mindestens ein Ende der erwähnten Feder mindestens eine nicht kreisförmige Windung (21; 31; 41) aufweist, die so gestaltet ist, dass sie in einem Zusatzgehäuse (221; 321; 421; 421) passt, das in einem Element angebracht ist, mit dem die Feder verbunden sein muss, so dass diese nicht kreisförmige Windung ständig unbeweglich, d.h., dass sie sich nicht dreht, gegenüber dem besagten Element bleibt.

2. Rollo nach Anspruch 1,
**dadurch gekennzeichnet, dass** die nicht kreisförmige Windung mindestens eine abgeflachte Stelle (211, 212) aufweist.

3. Rollo nach einem der Ansprüche 1 oder 2,
**dadurch gekennzeichnet, dass** die nicht kreisförmige Windung zu der folgenden Gruppe gehört:
- den ebenen Querschnitten, die eine einzige Abflachung bilden;
- den quadratischen oder rechteckigen Querschnitten;
- den Querschnitten, die zwei in etwa parallele Abflachungen aufweisen;
- den sechseckigen Querschnitten;
- den ovalen oder länglichen Querschnitten;
- den Querschnitten, die mindestens einen Buckel und/oder mindestens eine Einbuchtung aufweisen.

4. Rollo nach einem der Ansprüche 1 bis 3,
**dadurch gekennzeichnet, dass** das Zusatzgehäuse (221; 321; 421; 521) über eine Rückhaltevorrichtung verfügt, die das Herausspringen der nicht kreisförmigen Windung bzw. Windungen aus diesem Gehäuse verhindert.

5. Spiralfeder, die eine Rückholkraft auf die Aufrollwalze eines Rollos, insbesondere für Kraftfahrzeuge, ausüben soll,
**dadurch gekennzeichnet, dass** mindestens ein Ende dieser Feder mindestens eine nicht kreisförmige Windung (21; 31; 41) aufweist, die so ausgebildet ist, dass sie in ein Zusatzgehäuse (221; 321; 421; 521) passt, das in einem Element angebracht ist, mit dem die Feder verbunden sein muss, so dass diese nicht kreisförmige Windung ständig unbeweglich, d.h., dass sie sich nicht dreht, gegenüber dem besagten Element bleibt.

6. Herstellungsverfahren eines Rollos, insbesondere für Kraftfahrzeuge, von der Art, die eine Spiralfeder aufweist, die auf die Aufrollwalze der aufrollbaren Stoffbahn eine Rückholkraft ausüben soll,
**dadurch gekennzeichnet, dass** es die folgenden Schritte umfasst:
- Gestaltung von mindestens einer Windung (21; 31; 41; 62; 71) von mindestens einem Ende der Spiralfeder, so dass sie einen nicht kreisförmigen Querschnitt aufweist;
- Ausbildung in dem Element oder in den Elementen (22; 32; 42; 52) eines zu diesem Zweck vorgesehenen Gehäuses (221; 321; 421; 521), das mit der Spiralfeder verbunden werden muss;
- Einschieben der nicht kreisförmigen Windung bzw. Windungen in das Gehäuse bzw. in die Gehäuse.

## Claims

1. Roller blind, in particular for a motor vehicle, of the type which has a spiral spring (20; 30; 40; 50; 60; 70) which is designed to impart a return force to a winding roller (5) for a screen (4) of a blind, **characterised in that** at least one of the ends of the said spring has at least one turn (21; 31; 41) with a non-circular profile which is designed to be able to be placed in an additional receptacle (221; 321; 421; 521) provided in an element with which the said spring must be rendered integral, such that the said turn which has a non-circular profile remains permanently immobile in rotation relative to the said element.

2. Roller blind according to claim 1, **characterised in that** the said non-circular profile has at least one flattened part (211, 212).

3. Roller blind according to claim 1 or claim 2, **characterised in that** the said non-circular profile belongs to the group comprising:
- flat profiles, which form a single flattened part;
- square or rectangular profiles;
- profiles which have two substantially parallel flattened parts;
- hexagonal profiles;
- ovoid or oblong profiles; and
- profiles which have at least one boss and/or at least one recess.

4. Roller blind according to any one of claims 1 to 3, **characterised in that** the said additional receptacle (221; 321; 421; 521) has retention means which prevent the said non-circular turn(s) from coming out of the said receptacle.

5. Spiral spring which is designed to impart a return force to a winding roller for a screen of a blind, in particular for a motor vehicle, **characterised in that** at least one of the ends of the said spring has at least one turn (21; 31; 41) with a non-circular profile which is designed to be able to be placed in an additional receptacle (221; 321; 421; 521) provided in an element with which the said spring must be rendered integral, such that the said turn which has a non-circular profile remains permanently immobile in rotation relative to the said element.

6. Method for production and assembly of a roller blind, in particular for a motor vehicle, of the type which has a spiral spring which is designed to impart a return force to a winding roller for a screen of a blind, **characterised in that** it comprises the steps of:
- forming at least one turn (21; 31; 41; 62; 71) of at least one of the ends of the said spiral spring, such that it has a non-circular profile;
- realisation in the element(s) (22; 32; 42; 52) which are to be rendered integral with the said spiral spring, of a receptacle (221, 321, 421, 521) provided for this purpose; and
- insertion of the said turn(s) with the non-circular profile in the said receptacle(s).
